# EUROPÄISCHE PATENTSCHRIFT

(11) **EP 0 692 342 B1**
(45) Veröffentlichungstag und Bekanntmachung des Hinweises auf die Patenterteilung: **29.12.1997**
(21) Anmeldenummer: 95109925.8
(22) Anmeldetag: 26.06.1995
(51) Int. Cl.: B24D 3/28, B23F 21/03

(54) **Verzahntes Honschleifwerkzeug**
Toothed honing tool
Rodoir denté

(30) Priorität: 13.07.1994 DE 9411326 U
(43) Veröffentlichungstag der Anmeldung: 17.01.1996
(73) Patentinhaber: Zahnradpräzision Horst Reineke & Co. GmbH, 58791 Werdohl (DE)
(72) Erfinder: HEINRICH, Horst, D-58809 Neuenrade (DE); REINEKE, Horst, D-58791 Werdohl (DE)
(74) Vertreter: Grundmann, Dirk, Dr.

(56) Entgegenhaltungen:
- EP-A- 0 411 253
- WO-A-94/13434
- DE-A- 2 304 398
- FR-A- 2 354 852
- PATENT ABSTRACTS OF JAPAN, Band 11, Nr. 205 (M-603), 03 Juli 1987
- DATABASE WPI, Sektion Ch, Woche 9416, Derwent Publications Ltd., London (GB); Klasse ALP, AN 94-131635 (16) XP002001749
- DATABASE WPI, Sektion Ch, Woche 8736, Derwent Publications Ltd., London (GB); Klasse ALP, AN 87-255305 (36) XP002001748

## Beschreibung

Die Erfindung betrifft ein verzahntes Honschleifwerkzeug für Präzisionszahnräder.

Präzisionszahnräder für beispielsweise Kraftfahrzeuggetriebe werden üblicherweise in zwei Arbeitsgängen auf ihre Endform geschliffen, wobei zunächst in einem axialen Schleifverfahren oder einem Wälzschleifverfahren ein Abtrag in der Größenordnung bis zu einigen Zehntel Millimetern und danach im Abroll-Honverfahren ein Abtrag bis zu einem oder mehreren Hundertstel Millimetern vorgenommen wird. Diese bekannte Arbeitsweise ist aufwendig und erfordert mehrere verhältnismäßig teure Werkzeuge.

Der Erfindung liegt die Aufgabe zugrunde, ein Honschleifwerkzeug zu schaffen, mit welchem im Abrollverfahren unter Abtrag bis zu ein bis zwei Zehntel Millimetern eine Dberflächengüte erzielt wird, die vergleichbar der im bisherigen Honverfahren erreichbaren Güte ist, so daß im allgemeinen eine einstufige Schleif- bzw. Honbearbeitung bei Präzisionszahnrädern nur noch vorzunehmen ist. Darüber hinaus soll das Honschleifwerkzeug preiswert und bruchfest sein und sich durch eine hohe Standzeit auszeichnen.

Zur Lösung dieser Aufgabe ist erfindungsgemäß vorgesehen, daß das Honschleifwerkzeug aus einer gleichmäßigen Mischung besteht aus
a) Kunstharz, insbesondere Epoxidharz,
b) keramischen Feinkörnern mit einer Korngröße zwischen 60 und 180 und
c) keramischen Grobkörnern, deren Abmessungen zwischen ein Viertel bis voller Zahnhöhe betragen.

Die Mischungsanteile liegen hierbei, bezogen auf das Gesamtgewicht des Honschleifwerkzeuges:
a) 10 bis 20 Gewichtsprozent Kunstharz, z.B. Epoxidharz,
b) 25 bis 40 Gewichtsprozent Feinkorn,
c) 40 bis 60 Gewichtsprozent Grobkorn.

Die Grobkörner bestehen der Erfindung zufolge vorteilhafterweise aus gebranntem Keramikmaterial, z.B. aus Korund, wobei Sinterkorund wegen seines Aufbaus aus unzähligen Kristalliten bevorzugt wird. Die Feinkörner bestehen ebenfalls aus Korund, dabei entweder vollständig oder teilweise ebenfalls aus Sinterkorund.

Das Honschleifwerkzeug nach der Erfindung ist preiswert herstellbar und im Vergleich zu üblichen Keramikschleifkörpern sehr bruchfest, was für einen Einsatz im Abrollverfahren von erheblicher Bedeutung ist. Aufgrund seines hohen Anteils an keramischen Grobkörnern können mit ihm Abtragungen am Werkstück bis zu zwei Zehntel Millimetern in kurzen Schleifzeiten vorgenommen werden. Durch die im Epoxidharz gleichzeitig mit eingebetteten keramischen Feinkörner wird aber zugleich eine hohe Oberflächengüte erreicht mit dem Vorteil, daß die Schleif/Honbearbeitung von Präzisionszahnrädern nunmehr in einem einstufigen Arbeitsgang ausgeführt werden kann. Von besonderem Vorteil hat sich hierbei erwiesen, wenn die Grobkörner zumindest in ihrem Kernbereich frei von Kunstharz, speziell Epoxidharz, sind. Die Grobkörner werden aus speziell vorgefertigten Sinterkorundplatten gebrochen und z.B. durch eine Vorbenetzung "abgedichtet", damit bei der Herstellung des Honschleifwerkzeuges kein oder möglichst wenig Epoxidharz in die Grobkörner eindringt und diese quasi tränkt. Dadurch behalten die Grobkörner über längere Standzeiten hinweg ihr hohes Abtragvermögen. Bei praktischen Erprobungen wurden hervorragende Ergebnisse mit einem Honschleifwerkzeug erzielt, das aus 12,5 % Epoxidharz, 37,5 % Feinkorn und 50 % Grobkorn zusammengesetzt ist.

Weitere Merkmale der Erfindung sind in den Unteransprüchen angegeben.

Der Gegenstand der Erfindung wird im folgenden anhand der Zeichnung näher beschrieben. In der Zeichnung zeigen:
- Fig. 1 und 2: in perspektivischer Ansicht ein innenverzahntes und ein außenverzahntes Honschleifwerkzeug nach der Erfindung und
- Fig. 3 und 4: zwei Zähne der Honschleifwerkzeuge im Querschnitt und in vergrößerter Darstellung.

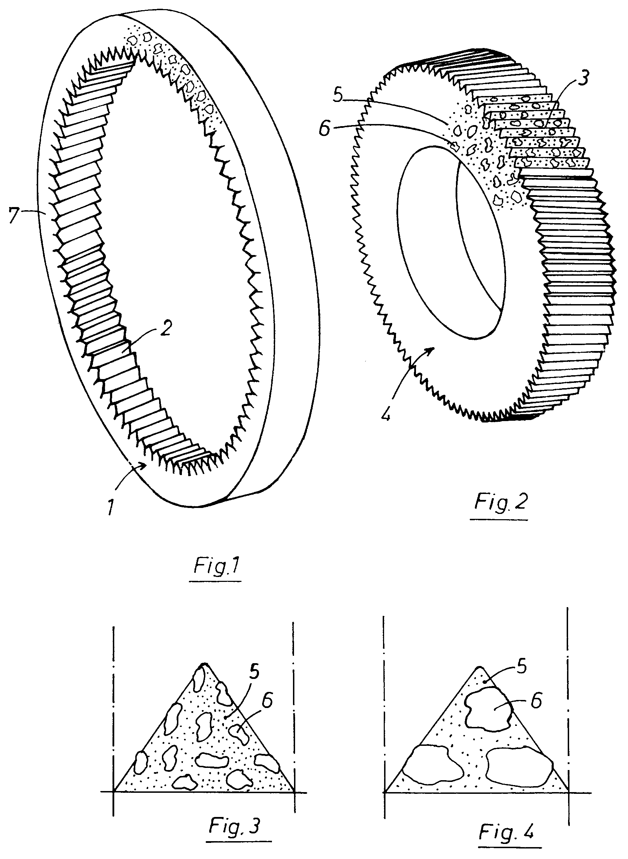

Das Honschleifwerkzeug 1 nach Fig. 1 besitzt die Form eines mit einer schrägen Innenverzahnung 2 versehenen Ringes, während Fig. 2 ein mit einer schrägen Außenverzahnung 3 versehenes Honschleifwerkzeug 4 zeigt.

Materialmäßig sind die Honschleifwerkzeuge aus in Epoxidharz gebundenen Feinkörnern 5 und Grobkörnern 6 aufgebaut, wobei die Feinkörner und Grobkörner gleichmäßig und homogen verteilt sind. Die nur als Punkte angedeuteten Feinkörner 5 besitzen vorzugsweise eine Korngröße zwischen 150 bis 180.

Die Korngröße der Grobkörner 6 ist in einem gewissen Maße abhängig von der Zahnhöhe bzw. vom Verzahnungsmodul zu wählen und beträgt in Fig. 3 etwa ein Viertel der Zahnhöhe und in Fig. 4 etwa ein Drittel der Zahnhöhe, kann aber auch gleich einer vollen Zahnhöhe sein, da die unregelmäßig gestalteten Grobkörner auch dann noch von der Seite her ausreichend fest im Kunstharz eingebettet sind.

Die Angabe der Korngröße erfolgt gemäß DIN 69100 bzw. DIN 69101 bzw. entsprechend der FEPA-Norm. Die Herstellung des Honwerkzeuges erfolgt durch Pressen. Feinkörner und Grobkörner werden dabei homogen in eine Kunststoffmatrix eingebettet, wobei der Gewichtsanteil der Grobkörner größer ist als der Gewichtsanteil der Feinkörner. Während die Feinkörner wesentlich kleiner sind als die Zahnhöhe, erreichen die Grobkörner etwa die Größenordnung der Zahnhöhe, sie sind jedoch kleiner als die volle Zahnhöhe. Zur Folge der erfindungsgemäßen Ausgestaltung liegen sowohl die Feinkörner, als auch die Grobkörner, welche bevorzugt aus einem keramisch gebundenen Feinkornmaterial bestehen, elastisch in einer Kunstharzmatrix ein. Anders als bei einem vollkeramischen Schleifring ist damit die Bruchgefahr wegen der Sprödheit des Materials erheblich verringert. Die Schleifleistung, d. h. hier das Abtragsvermögen von Vollkeramikschleifkörpern bleibt aber erhalten, da im Zuge der Abnutzung des Honringes die keramischen Abriebflächen der Grobkörner in der Summe etwa die gleiche Größe haben, wie die Abriebfläche der eingebetteten Feinkörner. Mit einer Schleifoberfläche, die sowohl aus keramischen gebundenen Material als auch aus Kunststoff gebundenen Material besteht, wird demzufolge gleichzeitig eine Grob- und eine Feinbearbeitung der Zähne erreicht. Während die Feinkörner eine Kantenlänge oder einen Durchmesser von weit unter einem Millimeter aufweisen, haben die Grobkörner Kantenlängen bzw. Durchmesser von einigen Millimetern. Bevorzugt haben die Grobkörner eine definierte Zusammensetzung. Die Grobkörner können aus dem identischen Material bestehen, wie die Feinkörner.

### Bezugszeichenliste

- 1: Honschleifwerkzeug
- 2: Innenverzahnung
- 3: Außenverzahnung
- 4: Honschleifwerkzeug
- 5: Feinkörner
- 6: Grobkörner

## Patentansprüche

1. Verzahntes Honschleifwerkzeug für Präzisionszahnräder, dadurch gekennzeichnet, daß es aus einer homogenen Mischung besteht aus
a) Kunstharz, z.B. Epoxidharz,
b) keramischen Feinkörnern (5) mit einer Korngröße, die wesentlich kleiner ist als die Zahnhöhe und zwischen 60 und 180 (FEPA Norm) liegt, und
c) keramischen Grobkörnern (6), deren Abmessung um mindestens eine Größenordnung größer ist als die Feinkorngröße, jedoch nicht größer ist als die Zahnhöhe und zwischen einem Viertel Zahnhohe bis voller Zahnhöhe beträgt.

2. Honschleifwerkzeug nach Anspruch 1, dadurch gekennzeichnet, daß die Mischungsanteile betragen
a) 10 bis 20 Gewichtsprozent Kunstharz,
b) 25 bis 40 Gewichtsprozent Feinkorn (5),
c) 40 bis 60 Gewichtsprozent Grobkorn (6).

3. Honschleifwerkzeug nach einem der vorhergehenden Ansprüche, gekennzeichnet durch eine Zusammensetzung von etwa
a) 12,5 % Epoxidharz,
b) 37,5 % Feinkorn (5),
c) 50 % Grobkorn (6).

4. Honschleifwerkzeug nach einem der vorhergehenden Ansprüche, dadurch gekennzeichnet, daß die Grobkörner (6) aus gebranntem Keramikmaterial bestehen.

5. Honschleifwerkzeug nach einem der vorhergehenden Ansprüche, dadurch gekennzeichnet, daß die Grobkörner (6) aus Korund, insbesondere Sinterkorund, bestehen.

6. Honschleifwerkzeug nach einem der vorhergehenden Ansprüche, dadurch gekennzeichnet, daß die Grobkürner (6) eine Größe zwischen zwei bis fünfzehn Millimetern aufweisen.

7. Honschleifwerkzeug nach einem der vorhergehenden Ansprüche, dadurch gekennzeichnet, daß die Grobkörner (6) zumindest in ihrem Kernbereich frei von Kunstharz sind.

8. Honschleifwerkzeug nach einem der vorhergehenden Ansprüche, dadurch gekennzeichnet, daß die Feinkörner (5) aus Korund, vorzugsweise vollständig oder teilweise aus Sinterkorund, bestehen.

9. Honschleifwerkzeug nach einem der vorhergehenden Ansprüche, dadurch gekennzeichnet, daß die Grobkörner untereinander materialidentisch sind und aus einem rein keramischen Bruchmaterial bestehen.

## Claims

1. Toothed honing tool for precision gearwheels, characterised in that it consists of a homogeneous mixture of
a) plastic resin, for example epoxy resin,
b) fine ceramic grains (5) having a grain size which is considerably smaller than the tooth height and lies between 60 and 180 (FEPA standard), and
c) coarse ceramic grains (6), the dimensions of which are greater than the fine grain size by at least one order of magnitude, but not greater than the tooth height and is between one quarter tooth height to full tooth height.

2. Honing tool according to claim 1, characterised in that the mixing proportions are
a) 10 to 20 weight per cent plastic resin,
b) 25 to 40 weight per cent fine grain (5),
c) 40 to 60 weight per cent coarse grain (6).

3. Honing tool according to one of the preceding claims, characterised by a composition of about
a) 12.5 % epoxy resin,
b) 37.5 % fine grain (5),
c) 50 % coarse grain (6).

4. Honing tool according to one of the preceding claims, characterised in that the coarse grains (6) consist of fired ceramic material.

5. Honing tool according to one of the preceding claims, characterised in that the coarse grains (6) consist of corundum, in particular sintered corundum.

6. Honing tool according to one of the preceding claims, characterised in that the coarse grains (6) have a size between two to fifteen millimetres.

7. Honing tool according to one of the preceding claims, characterised in that the coarse grains (6) are free of plastic resin at least in their core region.

8. Honing tool according to one of the preceding claims, characterised in that the fine grains (5) consist of corundum, preferably completely or partially of sintered corundum.

9. Honing tool according to one of the preceding claims, characterised in that the coarse grains are all of identical material and consist of purely ceramic broken material.

## Revendications

1. Outil denté de rodage ou de rasage pour des roues d'engrenage de précision, caractérisé en ce qu'il compose d'un mélange homogène de :
a) résine synthétique, par exemple, résine époxyde,
b) grains fins de céramique (5) dont la granulométrie est sensiblement inférieure à la hauteur de dent et est comprise entre 60 et 180 (norme FEPA), et
c) de grains céramiques grossiers (6) dont les dimensions sont supérieures d'au moins un ordre de grandeur à la taille des grains fins, mais ne sont cependant pas supérieurs à la hauteur de dent et sont comprises entre un quart et la totalité de la hauteur de dent.

2. Outil de rodage ou de rasage selon la revendication 1, caractérisé en ce que les parties de mélange sont de :
a) 10 à 20% en poids de résine synthétique,
b) 25 à 40% en poids de grains fins (5),
c) 40 à 60% de grains grossiers (6).

3. Outil de rodage ou de rasage selon l'une des revendications précédentes, caractérisé par une composition d'environ :
a) 12,5% de résine époxyde,
b) 37,5% de grains fins (5),
c) 50% de grains grossiers (6).

4. Outil de rodage ou de rasage selon l'une des revendications précédentes, caractérisé en ce que les grains grossiers (6) se composent de matériau céramique soumis à la cuisson.

5. Outil de rodage ou de rasage selon l'une des revendications précédentes, caractérisé en ce que les grains grossiers (6) se composent de corindon ou d'émerit, en particulier de corindon frité.

6. Outil de rodage ou de rasage selon l'une des revendications précédentes, caractérisé en ce que les grains grossiers (6) présentent une taille comprise entre deux et quinze millimètres.

7. Outil de rodage ou de rasage selon l'une des revendications précédentes, caractérisé en ce que les grains grossiers (6) sont exempts de résine synthétique au moins dans leur zone de noyau.

8. Outil de rodage ou de rasage selon l'une des revendications précédentes, caractérisé en ce que les grains fins (5) sont constitués de préférence complètement ou partiellement de corindon frité.

9. Outil de rodage ou de rasage selon l'une des revendications précédentes, caractérisé en ce que les grains grossiers sont, entre eux, dans le même matériau et se composent d'un matériau céramique pur concassé.
